(19) Europäisches Patentamt
European Patent Office
Office européen des brevets

(11) **EP 2 061 166 A2**

(12) **EUROPEAN PATENT APPLICATION**

(43) Date of publication:
**20.05.2009 Bulletin 2009/21**

(51) Int Cl.:
***H04H 20/26*** (2008.01)

(21) Application number: **08169197.4**

(22) Date of filing: **14.11.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.11.2007 GB 0722339**

(71) Applicant: **KINGS COLLEGE LONDON**
**London WC2R 2LS (GB)**

(72) Inventors:
• **Shanker, Uma**
**Bracknell, RG42 1PA (GB)**
• **Aghvami, Abdol, Hamid**
**London, W5 2NQ (GB)**
• **Pangalos, Paul, Anthony**
**London, N9 7QN (GB)**

(74) Representative: **Casbon, Paul Richard**
**Lucas & Co,**
**135 Westhall Road**
**Warlingham, Surrey CR6 9HJ (GB)**

(54) **Improvements in or relating to broadcast networks**

(57)    In a broadcast network environment comprising a first broadcast network and a second broadcast network, each broadcast network for broadcasting a plurality of services, each service identifiable by a respective service identity, and in which mobile receivers are assisted to handover reception of a service from one of said first and second broadcast network to the same or a similar service in the other of said first and second broadcast networks, by transmitting handover data toward said mobile receivers, which handover data comprises a mapping between a service identity of a service in said first broadcast network and a corresponding service identity of the same or a similar service in said second broadcast network, a method of generating said handover data for transmission to said mobile receivers, characterised by the steps of said first broadcast network:
(a) receiving a broadcast signal from said second broadcast network;
(b) for said service identity in said first broadcast network, using a likely common identifier to search for one or more corresponding service in service information data found in said broadcast signal, whereby if available said corresponding service identity of the same or a similar service in said second broadcast network is discovered.

**FIG. 8**

EP 2 061 166 A2

## Description

### FIELD OF THE INVENTION

The present invention relates to a method of generating handover data for transmission to mobile receivers, a method of assisting mobile receivers to handover from one broadcast ne twork to another, to a method of processing raw data for transmission in a broadcast network, to a method of broadcasting data in a digital broadcast network, to a mobile receiver and to a multi-mode terminal, both for use the method as aforesaid, to a broadcast network configured to perform the method steps, to various servers configured to assist in performing the method, and to a method of assisting mobile receivers to handover from a broadcast network to a bi-directional network.

### BACKGROUND TO THE INVENTION

Several different protocols have been proposed for broadcasting digital data to handheld mobile receivers, including Digital Video Broadcast - Handheld (DVB-H), Terrestrial Digital Multimedia Broadcasting (T-DMB), MediaFLO®, Integrated Digital Services Digital Broadcast - Terrestrial (ISDB-T), Advanced Television Systems Committee - Mobile/ Handheld (ATSC-M/H), Digital Audio Broadcasting - IP (DAB-IP) and Multimedia Broadcast Multicast Service (MBMS). Such technologies are primarily differentiated from one another at the link layer and at the physical layer, rather than at higher layers. In particular, many of these technologies are similar in that they use MPEG-2 at the transport layer, but differ insofar as they use different techniques at the link and physical layers to broadcast the transport stream(s).

Each service broadcast using such technologies is identified by a service identifier, the purpose of which is to enable mobile receivers to filter the correct packets from the transport stream after decoding the signal received at the physical layer. Each network broadcasts service data at regular intervals to inform receivers about the services that it broadcasts. The service data often takes the form of Program Specific Information (PSI) and Service Information (SI). Reading of the PSI/SI tables by each receiver enables it to tune to a particular service, such as BBC1, that has been selected by a user.

The area of signal coverage provided by each broadcast network may be divided into a number of cells. A broadcast cell may be defined as a geographic area that is covered with broadcast signals delivering one or more service throughout the area by means of one or more transmitter and/or repeater. Thus each broadcast network may comprise one or more broadcast cell. Handheld devices are portable and therefore users will expect to be able move throughout the area of signal coverage of a network whilst receiving a service and experience seamless, or substantially seamless, reception. There are two problems that must be overcome to achieve this goal: firstly movement between cells within one network, and secondly movement between one network and another

Taking DVB-H as an example, in the case of a Single Frequency Network (SFN) a DVB-H terminal may perform a seamless handover in the first scenario as it does not have to scan for different frequencies when it moves between different cells, since all transmitters use the same frequency. Even in a multiple frequency network (MFN), a DVB-H terminal can use the time -slicing off-period to scan for new frequencies and accordingly start reception of a new MPEG-TS (see ETSI EN 302 304). Furthermore the master multiplex transmitted throughout the network (whether or not on the same or different frequencies) will have the same PSI/SI data and therefore the program identifier (PMT_PID or service_id) of the service will remain the same throughout the network.

A DVB-H service is uniquely identified within a given DVB-H network by a PID which is stored in the Program Map Table (PMT). Accordingly it is sometimes also known as the PMT_PID. If the same service is provided by a different DVB-H network, it is very likely that it will be transmitted using a different PID number in the PMT of that network. Furthermore ETSI TR 101 211 section 4.1.3 suggests that once a service_id has been assigned to specific service in a network, that it remain unchanged in order to enable receivers to implement features such as favourite channel lists, etc. Therefore if two network operators PMT_PIDs and services do not match there is little chance of them matching in the future.

If a terminal switches from its current broadcast cell to another broadcast cell belonging to a different network operator the terminal does not know under which service identifier the current service is available in the new network.

One possible way to overcome this problem is for the terminal to perform a frequency scan and decide which frequency, network and cell to handover to. Secondly the terminal looks into the Electronic Program Guide (EPG) and compares the services content to find out the same service in the new network. This might be performed by using text string searching of the EPG for example. Once the same service is discovered in the EPG, the terminal tries to find out the service identifier of the service in the PMT table by parsing the PAT table. However, this method is time consuming and requires a lot of processing power from the terminal, thus reducing the battery life. For mobile receivers it is critical to preserve battery power and therefore to ensure that the processing power required to complete any procedure is reduced where possible.

EP 1 838 018 discloses a method for providing a broadcast service to a terminal by a network in a Digital Video Broadcasting-Handheld (DVB-H) Convergence of Broadcasting and Mobile Service (CBMS) system. The method includes generating Program Specific Information/Service Information (PSI/SI) indicative of information related to a broadcast service requested by the terminal; generating mapping information for information on the broadcast service in an Internet Protocol (IP) platform from which the terminal is currently receiving the broadcast service, and for information on a broadcast service corresponding to the broadcast service in IP platforms other than the IP platform; and including the generated mapping information in an IP/Medium Access Control (MAC) Information Notification Table (INT) of the PSI/SI, and delivering the INT to the terminal.

However EP 1 838 018 does not disclose how the mapping information is compiled, nor how it may be kept up to date. We have realised that this is a particular problem since many broadcast networks are independent of others and there is no universally recognised method to assign service identities to services in all broadcast networks. Hence, there is likely to be little agreement between networks on which channel (e.g. BBC1) is carried on which service identity.

## SUMMARY OF THE INVENTION

According to the present invention there is provided in a broadcast network environment comprising a first broadcast network and a second broadcast network, each broadcast network for broadcasting a plurality of services, each service identifiable by a respective service identity, and in which mobile receivers are assisted to handover reception of a service from one of said first and second broadcast network to the same or a similar service in the other of said first and second broadcast networks, by transmitting handover data toward said mobile receivers, which handover data comprises a mapping between a service identity of a service in said first broadcast network and a corresponding service identity of the same or a similar service in said second broadcast network, a method of generating said handover data for transmission to said mobile receivers,
characterised by the steps of said first broadcast network:

(a) receiving a broadcast signal from said second broadcast network;
(b) for said service identity in said first broadcast network, using a likely common identifier to search for one or more corresponding service in service information data found in said broadcast signal, whereby if available said corresponding service identity of the same or a similar service in said second broadcast network is discovered. This method provides a dynamic way for the handover data to be automatically updated without manual operation. Furthermore it offers to possibility for continuous or near-continuous updating so that mobile receivers always have the best handover data available and are likely to switch to a suitable channel in the new network. The step of receiving the broadcast signal may comprise using a decoder to receive the actual broadcast signal (e.g. over a wired or wireless interface) and analysing the or each transport stream from the network. Alternatively the step of receiving the broadcast signal may comprise receiving the SI tables over a computer network such as the Internet. The former option has the advantage that no particular co-operation between network operators is necessary for the invention to be workable.

In a preferred embodiment the service information data comprises at least one Service Information table. Such SI table(s) may have a data structure that conforms with a standard such as EN 300 468 for example.

It should be noted that as used herein the word 'handover' does not have its traditional meaning in the context of cellular networks. A handover associated with a broadcast network means a change in reception of data from one network to reception of data from another network. The network itself need not manage, take part in or be informed of such a handover. Of course, this doesn't preclude the network from being involved in a handover for example for billing and/or authentication purposes. This may require communication with the network either before, during or after the handover.

The first and second broadcast networks may be adjacent one another in terms of signal coverage, and may have one or more portion of overlap. It is also possible for the one network's coverage to be wholly within the signal coverage of the other. This might be the case with different technologies, for example DVB-H and T-DMB, serving users in the same area.

Preferably, if said corresponding service identity is not discovered, step (b) is repeated using another likely common identifier that is less specific than the first. This has the effect of increasing the chances of there finding a similar service. For example, instead of searching for services falling into a comedy movie category, the likely common identifier may be simply movies instead. In this way any channel showing any movie of any sort is located.

Advantageously, said common identifier comprises a service descriptor, and wherein step (b) comprises using said service descriptor to search said service information data for a matching service descriptor in said second broadcast network. For example, a very specific search may be firstly performed that uses the service_name part of the service descriptor to search for a matching channel (e.g. BBC1) in the other network..

Preferably, said common identifier comprises a first content descriptor identifying the type of service in said first broadcast network, and step (b) comprises using said first content descriptor to search said service information data for a matching first content descriptor in said second broadcast network. In this way it is possible to search on the basis of matching content.

If said corresponding service identity is not discovered, step (b) is repeated using a second content descriptor less specific than the first. A less specific content descriptor may be a genre of programme (e.g. movie/drama, sports, etc.) rather than a more specific type of programme (e.g. comedy movie or tennis match).

Advantageously, the method further comprises the step of repeating steps (a) and (b) periodically, whereby changes in services in either said first or second broadcast network are reflected in said handover data and mobile receivers are able to choose the most appropriate corresponding service during a handover.

According to another aspect of the present invention there is provided in a broadcast network environment comprising a first broadcast network adjacent a second broadcast network, each broadcast network for broadcasting a plurality of services, each service identifiable by a respective service identity, a method of assisting mobile receivers to handover reception of a service from one of said first and second broadcast network to the same, a similar or an associated service in the other of said first and second broadcast networks, which method comprises the steps of transmitting handover data toward said mobile receivers, which handover data comprises a mapping between a first service identity of a service in said first broadcast network and a second service identity of the same service in said second broadcast network. It should be noted that as used herein the word 'handover' does not have its traditional meaning in the context of cellular networks. A handover associated with a broadcast network means a change in reception of data from one network to reception of data from another network. The network itself need not manage, take part in or be informed of such a handover. Of course, this doesn't preclude the network from being involved in a handover for example for billing and/or authentication purposes. This may require communication with the network either before, during or after the handover.

The first and second broadcast networks may be adjacent one another in terms of signal coverage, and may have one or more portion of overlap. It is also possible for the one network's coverage to be wholly within the signal coverage of the other. This might be the case with different technologies, for example DVB-H and T-DMB, serving users in the same area.

Preferably, said transmission step comprises transmitting:

(a) a first network identity of said first broadcast network mapped to said first service identity, and
(b) a second network identity of said second broadcast network mapped to said second service identity;
receipt of said handover data facilitating said mobile receiver to handover reception of said service from said first broadcast network to the second, and from said second broadcast network to the first. Whilst it is possible to transmit separate sets of handover data each covering a handover in one direction (i.e. first to second, or second to first), by transmitting the network identifier with the handover data it is possible for one set of handover data to cover a handover in either direction.

Advantageously, the method further comprises the step of transmitting as part of said handover data a network type attribute which indicates the type of each of said first and second broadcast networks, whereby handover of said mobile receiver between networks of different types is facilitated. Broadcast networks may be differentiated by link and physical layer transmission protocol, such as DVB-H, T-DMB, ISDB-T, ATSC-M/H, MediaFLO, DAB-IP etc.

Preferably, the method further comprises the step of transmitting a URI in said handover data mapped to said first and second service identities, whereby handover of said mobile receiver from one of said first and second broadcast networks to a bi-directional network is facilitated. Bi-directional networks include WLANs, cellular networks (including femtocells), Wi-fi and WiMAX networks for example. Further optional attributes that could be included in the HAT include SSID of WLAN to attach to, MAC address of the WLAN interface of the access point, and possibly a username and password combination, one for the WLAN itself and one for the media server where the service can be obtained. In some aspects the URI may be transmitted in the form of a URL, and in other aspects as an IP address and Transport Service Access Point (TSAP), such as a port number.

Advantageously, said first service identity, said second service identity and said URI are transmitted in respective fields, the method further comprising the step of transmitting said field designated for either said first or second service identity as blank. In this way the handover data may be used solely for the purpose of handover from a broadcast network to a bi-directional network. However, by transmitting data in all three fields the mobile receiver has access to data facilitating handover between any two of the three networks, i.e. six possible handover combinations.

Preferably, the method further comprising the step of transmitting a network identifier of a bi-directional network to which said mobile receiver may handover, said network identifier mapped to said URI, such that said handover data comprises a plurality of entries for said first service identity, each entry mapping to a respective bi-directional network, whereby said mobile receiver may use said handover data and a network identifier received from a candidate bi-directional network to determine the correct URI from which the same, an associated or a related service may be obtained via said candidate bi-directional network. In this way the handover data can differentiate between different bi-directional networks (such as WLANs, femtocells, etc.) within the area of coverage of the first and second broadcast networks.

In another aspect the method further comprises the step of transmitting a base station identifier with said network identifier, whereby said mobile receiver may distinguish between two or more bi-directional networks of the same type detected by said mobile receiver. The base station identifier may be a Cell ID and/or hardware identifier. The hardware identifier can be MAC address for example.

Preferably, said handover data is transmitted comprising a mapping between substantially all of the services in said first broadcast network that have corresponding services in said second broadcast network. Therefore it is possible for the data to map only a subset of the services in each network that match one another. For example the first network may have ten television channels in total, but only six of those channels have matching channels in the second network. In that case, the handover data would map the service identities of those six channels to the corresponding service identities in the second network. Of course, if all of the services in the first network match all of the services in the second network, the handover data may map all service identities together.

Advantageously, the method further comprises the step of storing in electronic memory a handover database comprising a mapping between service identities in said first broadcast network and service identities in said second broadcast network. This step may be performed manually by co-operation between network operators, and include the step of transmitting electronically or otherwise making available (e.g. via a website) service identity data to the other operator.

Preferably, the method further comprises the steps of an operator of one of said first and second broadcast networks receiving a broadcast signal from the other of said first and second broadcast networks, reading and storing service identities from Service Information tables contained therein and mapping said service identities to the corresponding services identities of said operator's broadcast network. The network operator may perform this step using a user mobile receiver. The receiver can be loaded with appropriate software to read and output the Service Information data for use by the operator.

Advantageously, the method further comprises the step of storing in said handover database a URI mapped at least one service identity.

Preferably, the method further comprises the step of storing in said handover database a network identifier mapped to said at least one service identity.

Advantageously, the method further comprises the step of processing handover data in said handover database into Service Information (SI) table format as a handover table, and storing said handover table (HAT) in said electronic memory.

Preferably, said transmission step comprises broadcasting said handover data to said mobile receivers. The broadcasting step may make use of any digital broadcast protocol, for example DVB-H, T-DMB, MediaFLO, ISDB-T, ATSC-M/H, or DAB-IP.

Advantageously, said broadcasting step comprises sending said handover data using at least one of: data piping, data streaming, multi-protocol encapsulation or data carousels.

Preferably, said handover data is broadcast as private data in an MPEG transport stream.

Advantageously, the method further comprises the step of broadcasting said handover data with a DVB SI table syntax.

Preferably, said broadcasting is performed using a DVB-H type technology, the method further comprising the step of using a Transmission Parameter Signalling (TPS) bit to flag to said mobile receivers whether or not said handover data is broadcast.

Advantageously, the method further comprises the step of making said handover database available to one or more cellular network.

Preferably, said step of making available comprises the step of storing said handover database on a server, which server is accessible to said one or more cellular network. The server may be configured to respond to request from the cellular network by transmitting all or some of the entries in the database to the cellular network. The server may be kept updated with correct service mappings using the same or similar content management systems that cellular network operators use to maintain other registers, such as the Home Location Register (HLR). The server may be located anywhere in the topology of the Internet for example. As such it may be a secure server to prevent unauthorised access to the handover database.

Advantageously, said one or more cellular network provides an MBMS type broadcasting service and said transmitting step comprises sending said handover data to one or more multicast group defined by the MBMS.

Preferably, the method further comprises the steps of establishing a multicast group to assist broadcast handovers, and sending said handover data only to said multicast group.

Advantageously, the method further comprises the steps of establishing a plurality of multicast groups, associating each multicast group with a respective set of handover data, whereby the handover options available to each mobile receiver may be controlled according to which multicast group that mobile receiver is a member.

Preferably, each set of handover data provides a mapping between a sub-set of service identities in said first broadcast network and a corresponding set of services in said second broadcast network, and transmitting each set of handover data to the respective multicast group, whereby mobile receivers are inhibited from receiving services not in said set. In this way the handover options for mobile receivers can be limited on the basis of billing tariffs, agreements between network operators, etc.

Advantageously, upon receipt of said handover data each mobile receiver performs the steps of:

(a) storing said handover data in memory; and
upon selection of a service by a user and reception thereof by said mobile receiver on said first service identity:
(b) monitoring whether or not to handover reception of said service from said first broadcast network to said second broadcast network; and
upon a decision to handover as determined by step (b):
(c) using said handover data to lookup said second service identity corresponding to said first service identity; and
(d) locating said service in said second broadcast network using said second service identity as determined in step (c).

Preferably, said mobile receivers comprise at least one multi-mode mobile terminal (MMT) each of which comprises a broadcast receiver for receiving data from said first and second broadcast networks and a cellular interface for transceiving data to and from said cellular network, said cellular network performing a method comprising the steps of:

(a) receiving a handover request message from said MMT for handover data to facilitate handover from said first broadcast network to said second broadcast network;
(b) said cellular network querying said handover database to determine a service identity in said second broadcast network that corresponds to a service identity in said first broadcast network; and
(c) said cellular network transmitting said service identity in said second broadcast network to said MMT.

Advantageously, the method further comprises the step of said cellular network transmitting substantially all of the data in said handover database to said MMT.

Preferably, said MMT performs the steps of:

(a) transmitting said handover data request message;
(b) storing handover data as received from said cellular network;
(c) upon selection of a service by a user and reception thereof by said mobile receiver on said first service identity:
(d) monitoring whether or not to handover reception of said service from said first broadcast network to said second broadcast network; and upon a decision to handover as determined by step (d);
(e) using said handover data as stored in step (b) to select and receive said service in said second broadcast network.

Advantageously, steps (a)-(e) are performed in response to selection of a service by the user of the MMT and/or if a handover is determined to be possible by said MMT.

Preferably, said mobile receivers comprise one or more multi-mode terminal (MMT) each of which comprises a broadcast receiver for receiving data from said first and second broadcast networks and a bi-directional interface for transceiving data to and from one or more bi-directional network, said MMT performing the steps of:

(a) detecting a network identifier one or more bi-directional network to which handover from said first or second broadcast network can be made;
(b) using said network identifier and a service identity of a service in said first or second broadcast network to look up in said handover data a URI mapped to said network identifier and said service identity; and
(c) using said URI to request delivery of a corresponding or associated service via said bi-directional network.

According to another aspect of the present invention there is provided a method of processing raw data for transmission using a digital broadcast network, which method comprises the step of processing raw handover data as set out above for insertion into an MPEG transport stream.

Preferably, the method further comprises the step of encoding said raw handover data with an MPEG encoder, and outputting an elementary stream comprising said handover data.

Advantageously, the method further comprises the step of multiplexing said elementary stream into a transport stream and passing said transport stream to a broadcast network.

According to another aspect of the present invention there is provided a method of broadcasting data in a digital broadcast network, which method comprises the step of broadcasting handover data as set out above from one or more transmitter in said broadcast network.

Preferably, the method further comprises the step of receiving a transport stream from a broadcast operator, and broadcasting said transport stream according to a digital broadcast standard for example DVB -H, T-DMB, ISDB-T, ATSC-M/H, MediaFLO, DAB-IP etc.

According to yet another aspect of the present invention there is provided a mobile receiver comprising a memory storing computer executable instructions that when executed cause said mobile receiver to perform the mobile receiver steps as set out above.

According to a further aspect of the present invention there is provided a multi-mode mobile terminal (MMT) comprising a memory storing computer executable instructions that when executed cause said MMT to perform the MMT method steps set out above.

According a yet further aspect of the present invention there is provided a broadcast network configured to perform the broadcast network method steps set out above.

According to another aspect of the present invention there is provided a server comprising a memory storing a handover database as defined above and computer executable instructions for receiving handover queries from a cellular network, performing a look up in said handover database and transmitting data therefrom to said cellular network.

According to another aspect of the present invention there is provided a server comprising a memory storing a handover database as defined above.

According to another aspect of the present invention there is provided in a heterogeneous network environment comprising a broadcast network and a bi-directional network, said broadcast network for broadcasting a plurality of services, each service identifiable by a respective service identity, a method of assisting mobile receivers to handover reception of a service from said broadcast network to the same, a similar or an associated service deliverable via said bi-directional network, which method comprises the steps of transmitting handover data toward said mobile receivers, which handover data comprises a mapping between a service identity of a service in said broadcast network, a network identifier of said bi-directional network, and a URI where said same, similar or associated service is available via said bi-directional network. In one embodiment the service identity is a PMT_PID and the mapping is broadcast in SI table syntax for reception by said mobile receivers. The handover data enables each mobile receiver to determine from which bi-directional network the same or a similar service is available. In particular the network identifier (e.g. an SSID, Mobile Network Code) enables the mobile receiver to determine when it is within range of the correct bi-directional network. The URI identifies the resource and provides a means of locating the resource by describing an access mechanism (e.g. its network location). The URI need not link directly to the service, but may provide access to intermediate data that assists the mobile receiver to take any appropriate steps before receiving the service.

Preferably, the method further comprises the step of transmitting a base station identifier mapped to said network identifier, the combination of said network identifier and said base station identifier assisting said mobile receiver to connect to a correct base station in the correct bi-directional network from where said same, similar or an associated service may be received. The base station identifier assists mobile receivers in differentiating between access points in same network. For example the combination of an SSID and MAC address of a WLAN access point enables a mobile receiver to check that it has detected the correct WLAN to connect to receive the service. In another example, the combination of a Mobile Network Code and cell ID enables a mobile receiver to check that it has detected the correct femtocell to connect to. The base station identifier may comprise a hardware identifier (such as a MAC address) or a cell identifier for example.

Advantageously, the method further comprises the step of transmitting security data mapped to said network identifier, which security data assists said mobile receivers to receive said same, similar or an associated service via said bi-directional network. The security data may comprise data such as a username and/or password for connecting to the bi-directional network and/or to the network location where the service is available.

Preferably, said bi-directional network comprises an MBMS and said URI provides a location of an SDP file describing how said same, similar or associated service may be accessed by said mobile receiver.

For implementing this aspect of the present invention there may also be provided a broadcast network configured to perform the method, one or more server for storing and processing handover data, and/or a multi-mode mobile terminal configured to perform the mobile receiver steps of the method.

## BRIEF DESCRIPTION OF THE FIGURES

For a better understanding of how the invention may be put into practice, preferred embodiments of the invention applied in a network environment comprising several digital broadcast type networks will be described, by way of example only, with reference to the accompanying drawings, in which:

Fig. 1 is a schematic block diagram of a first embodiment of a network according to the present invention comprising server according to the present invention;
Fig. 2 is a schematic block diagram of the server in Fig. 1;

Fig. 3 is a schematic block diagram of the mobile receiver in Fig. 1;

Fig. 4 is a schematic diagram of an MPEG transport stream and some of its component parts, together with some of the PSI/SI data associated with the transport stream;

Fig. 5 is a schematic network diagram of a DVB-H network environment in which a mobile terminal may receive data broadcast by two different DVB-H networks;

Fig. 6 is a schematic diagram of handover data in accordance with the present invention;

Fig. 7 is a schematic block diagram illustrating steps of a method in accordance with the present invention;

Fig. 8 is schematic diagram illustrating formation of the handover data of Fig. 6;

Fig. 9 is a schematic block diagram of a second embodiment of a network environment according to the present invention;

Fig. 10 is a schematic block diagram of a multi-mode terminal in the network environment of Fig. 9; and

Fig. 11 is a signalling diagram for handover of a multi-mode mobile terminal in the network environment of Fig. 9.

## DETAILED DECRIPTION OF THE PREFERRED EMBODIMENTS

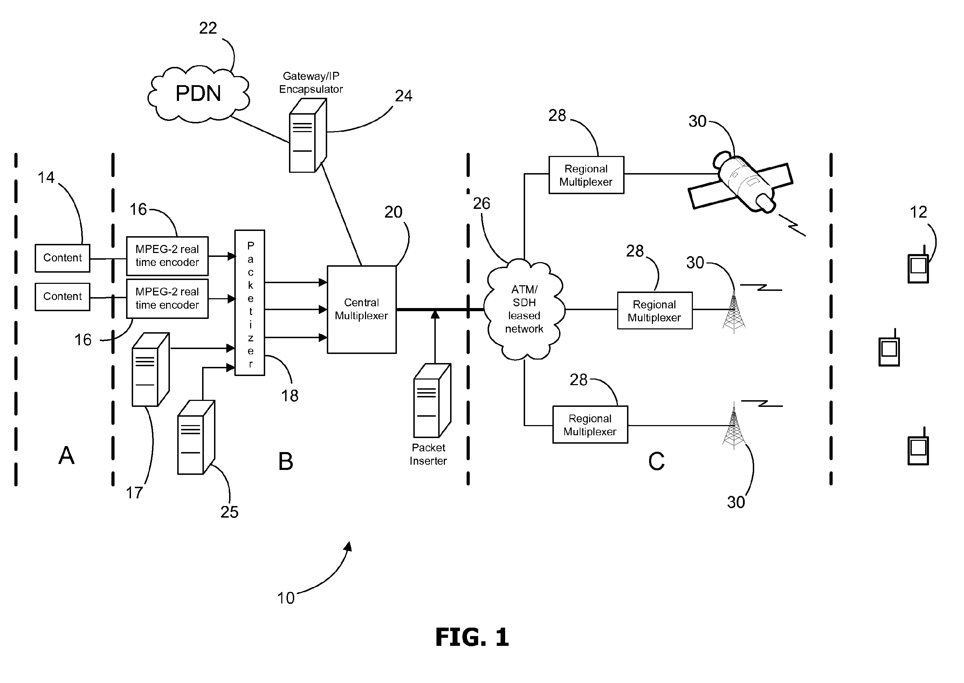

Referring to Fig. 1 there is shown a broadcast network 10 for broadcasting data to one or more mobile terminal 12 (also known as Integrated Receiver Decoder IRD in the DVB standards). A first part 'A' of the broadcast network comprises various sources of content 14. The sources of content 14 may be one or more servers operated and controlled by one or more content provider for example. The content provider may produce and store raw audio and visual data intended for subsequent transmission to the mobile terminals 12. Alternatively the data may be generated from a live television program for example.

A second part 'B' of the broadcast network 10 comprises a DVB operator whose function is to process the raw audio and visual data supplied by the production company so that it is ready for transmission. To that end the DVB operator uses a number of MPEG encoders 16 that compress audio and video content from the production company into respective MPEG elementary streams, for example MPEG-2 elementary streams. Stored raw or MPEG data may also be retrieved from a content server 17 for processing by the DVB operator. The elementary streams are then passed through a packetizer 18 to generate a packetized elementary stream (PES). Finally, each PES is packetized again to generate a stream of transport packets. A central multiplexer 20 converts the transport packets into a transport stream (TS). IP datagrams arriving from an external Packet Data Network (PDN) 22 (e.g. Internet) through a Gateway/IP encapsulator 24 may be packetised and multiplexed into the transport stream. In particular the gateway 24 operates by taking IP datagrams received from the external PDN and inserts them into MPEG-TS packets according to Multi Protocol Encapsulation (MPE) for example (see ETSI EN 301 192 VI.4.1 at www.etsi.org).

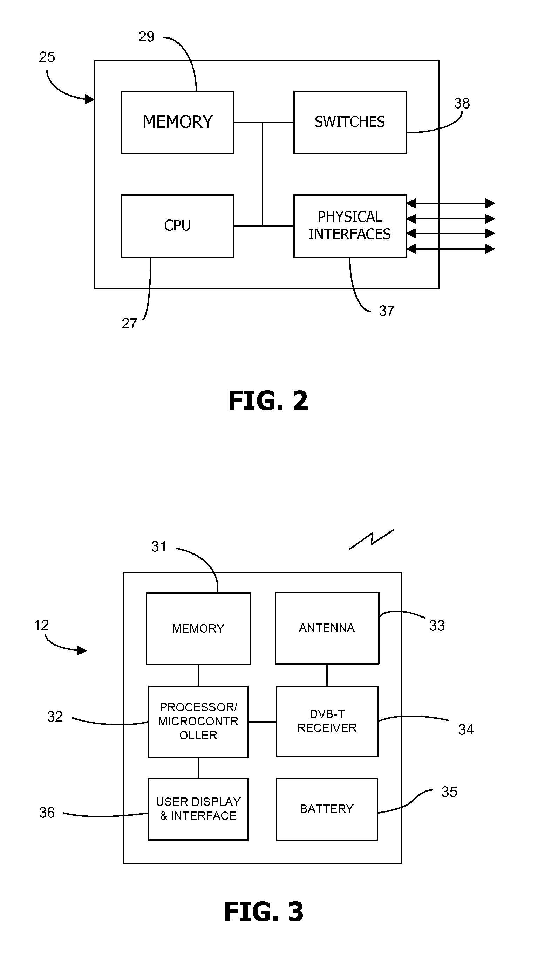

As described in further detail below the DVB operator also generates meta-data (or service data) in the form of PSI/SI data to describe the data in the transport stream, and provides other service and network related parameters to the mobile receiver 12. This PSI/SI data forms a separate elementary stream that is multiplexed into the transport stream. Other data, such as teletext services, may also be multiplexed into the transport stream. To create the PSI/SI data the DVB operator uses one or more server 25. Referring to Fig. 2 the server 25 comprises a CPU 27, a memory 29, several physical interfaces 37 and switches 37. The DVB operator may use the server 25 to configure and maintain the PSI/SI tables. As such the server 25 may receive inputs from other devices internal or external to the DVB operator, and manual inputs from the DVB operator. The server 25 outputs a stream of data to the packetiser 18 for processing as described above and on to the central multiplexer 20 where it becomes part of the multiplex for broadcast. Most DVB operators use bespoke software built in-house and stored on server 25 to edit and maintain PSI/SI tables. However, there is some open-source software available for this purpose, such as DVB-IT 2.0 available from Cineca DVB Software (see krusty.cineca.it/vpweb/cgi-bin/blosxom.cgi/ - available at the priority date hereof).

Referring again to Fig. 1 the third part 'C' of the broadcast network 10 comprises the transmission infrastructure required to actually broadcast the transport stream(s). The multiplexed streams are transmitted for example over an ATM (Asynchronous Transfer Mode) or SDH (Synchronous Digital Hierarchy) network 26 to a number of regional multiplexers 27. The regional multiplexers 28 may multiplex further elementary streams into the transport stream received from the central multiplexer 20. For example local news and weather content may be multiplexed into the main TS from the central multiplexer 20.

Each regional multiplexer 28 forward s its corresponding TS to a respective DVB transmitter 30, which may for example be a satellite or a ground-based transmitter. DVB transport streams may be broadcast implementing one of a number of different DVB standards. The present embodiment is primarily concerned with distribution under the DVB-H standard (see ETSI EN 302 304 v1.1.1) i.e. in a format suitable for reception by handheld mobile receivers; the present invention is also application to any standard derived from or similar to the current DVB-H standard. Furthermore the present invention is also applicable to other transmission technologies such as T-DMB, ATSC-M/H, ISDB-T, MediaFLO, DAB-IP etc. Each transmitter 30 broadcasts data to a DVB cell i.e. a limited geographical area of coverage. Thus the DVB-H network can be considered 'cellular'.

It is to be noted that the parts of the network A, B and C mentioned above are shown separated for logical purposes only. It may be that two or more of the parts are provided by one commercial entity. For example, the BBC® might generate content, perform the encoding and multiplexing, and then broadcast the data from one or more DVB transmitter; the transport stream would comprise PSI/SI data for that particular broadcast instance. Alternatively the BBC might transfer either the content or the MPEG compressed data to another network operator, such as SKY®, who would broadcast the data in their own transport stream(s). In the latter scenario SKY (or a third party provider) would generate new and or adjusted PSI/SI data to accompany the content for that particular broadcast instance.

Referring to Fig. 3 the mobile receiver 12 comprises a memory 31, a microprocessor 32, an antenna 33, a DVB-T receiver 34, a battery 35 and a user display 36. Under control of the microprocessor the mobile receiver 12 is able to process the DVB-H signals received by the antenna 33, to demultiplex the transport stream and to output MPEG audio and/or video, and/or IP data, of the selected service for display to the user on the user display 36 and/or further processing by an application program running on the mobile receiver 12. The memory 31 *inter alia* stores computer executable instructions for performing the mobile receiver method steps as described herein.

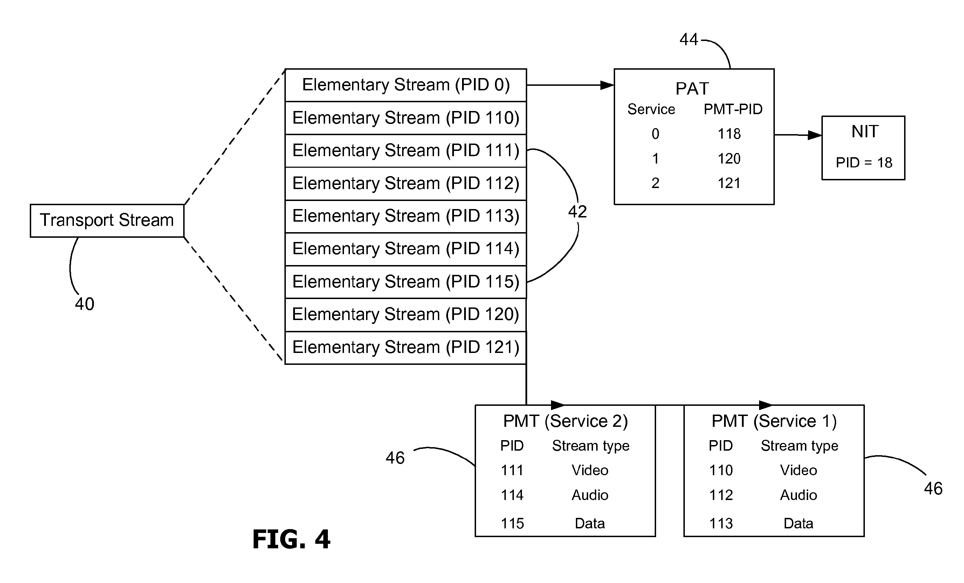

Referring to Fig. 4 a transport stream 40 generated by the DVB operator comprises a number of elementary streams 42 as described above. Depending on the link-layer parameters selected, DVB-H may support various bit rates up to about 10Mbps. Depending on the available bit rate each transport stream comprises one or more channels (in the television sense). Each channel (known as a 'service' in DVB terminology) comprises a number of the elementary streams.

Each elementary stream has a 'packet identifier' (usually known as a PID) that acts as a unique identifier for that stream within the transport stream. The only restriction on the number of elementary streams in any transport stream is that each elementary stream must have a unique PID value within the transport stream that contains it. As the PID is a 13-bit value, this is not usually a major restriction.

A demultiplexer in the mobile receiver 12 has to be told what the PIDs are and what audio belongs with what video (for example) before it can be shown. This function is *inter alia* the responsibility of the PSI/SI data. A Program Association Table (PAT) 44 is always found at PID 0 of any transport stream and the PAT lists all the services found in that transport stream. The PAT 44 enables the mobile terminal to discover which service (or channel) is associated with which PMT_PID. In this example service 1 is found in transport packets with a PMT_PID of 120. When the demultiplexer filters and reads the data in packets with this PMT_PID, a Program Map Table (PMT) 46 is constructed. The PMT lists the PID of each elementary stream that forms part of service 1.

The PSI/SI data has numerous other functions: details can be found in ETSI TR 101 211 V1.7.1 to which specifically made in this respect.

Each transport stream is generally broadcast on one frequency channel (e.g. of 5MHz, 6MHz, 7MHz or 8MHz width) from the DVB transmitters (and possibly also from repeaters) of each network, although in some circumstances more than one transport stream may be broadcast per frequency channel. Such a network is known as a Single Frequency Network (SFN). It is possible for one broadcast network to comprise one or more SFN.

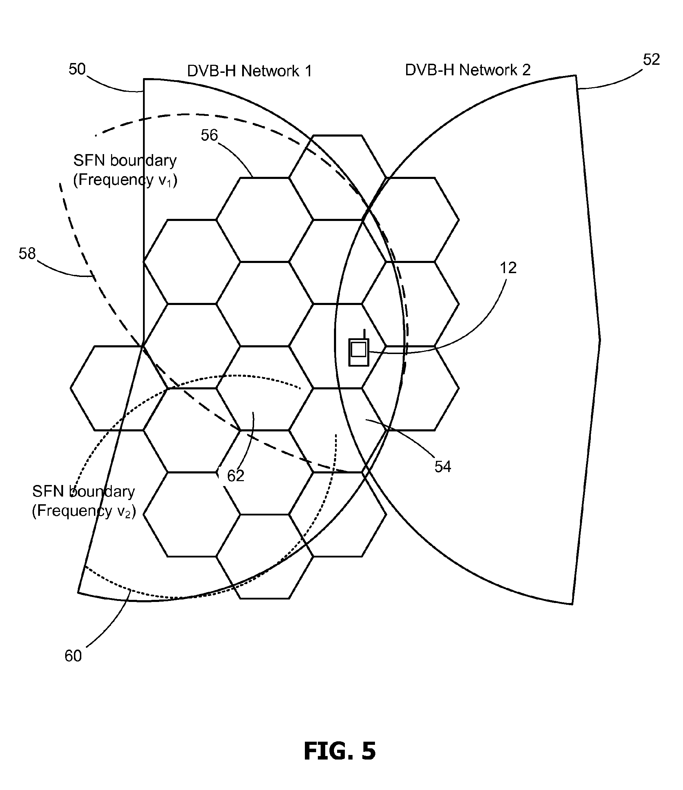

Referring to Fig. 5 there is shown schematically a first DVB-H network 50 and a second DVB-H network 52 having an area of overlap 54 in which mobile terminals may tune to receive transport streams from either network. Individual transmitters (and/or repeaters) 56 within each network are shown only by their area of coverage; the hexagonal area of coverage is of course simply for the purposes of illustration. First network 50 comprises two SFNs 58 and 60, also having an area of overlap 62. The SFN 58 broadcasts on frequency $v_1$ and the SFN 60 broadcasts on frequency $v_2$. The mobile receiver 12 resides somewhere in the area of overlap 54 and may be receiving a particular service broadcast from the first network 50.

There are several scenarios that could occur if and when the mobile receiver moves whilst receiving a service:

(1) the mobile receiver 12 remains within the SFN 58; or
(2) the mobile receiver 12 moves from SFN 58 to SFN 60; or
(3) the mobile receiver 12 moves from the first network 50 to the second network 52.

(1) presents little difficulty in terms of continuity of reception of the channel (see introduction hereto). In (2), when the mobile receiver 12 enters the area of overlap 62 it may be triggered to scan for alternative frequencies during off periods (DVB-H transmission utilises time-slicing at the physical layer to reduce wastage of battery power of mobile receivers). Such a trigger may occur when the C/N ratio drops below a certain threshold. During the off-times the mobile receiver may discover a transport stream on frequency $v_2$ from SFN 60. Since the SFN 58 and SFN 60 broadcast the same multiplex (albeit on different frequency channels), the same service_ids (i.e. PMT_PID) are used in both networks. Accordingly, once the mobile receiver 12 has discovered a transport stream in the SFN 60 it simply has to read the PAT or SDT until it finds the same PMT_PID. If it is not found in that transport stream, the mobile receiver finds another transport stream from SFN 60 (e.g. by reading the NIT containing the terrestrial_delivery_system_descriptor) and repeats the process. On the basis of this search the mobile receiver 12 can decide whether or not to switch to SFN 60. The disadvantage of an approach such as this is that it requires considerable processor resources and time, and therefore reduces battery life.

In (3) when the mobile receiver 12 is located in the area of overlap 54 between the two networks 50 and 52, it may become desirable for the mobile receiver 12 to handover or switch to reception of a transport stream broadcast from the second DVB-H network 52 (for example if the C/N ratio of the signal from DVB-H network 50 becomes lower than that from the DVB-H network 52). Although it is quite likely that the same channel (i.e. the current service to which the mobile receiver 12 is tuned) is available in the second DVB-H network 52, the mobile receiver 12 cannot easily determine the correct service_id (i.e. PMT_PID) in second network 52 to receive that service. Although at this stage the mobile receiver 12 may receive PSI/SI tables from the network 52 (during the off times mentioned above), it has no idea which service from network 50 exactly maps to which service in the network 52.

*Handover Association Table (HAT)*

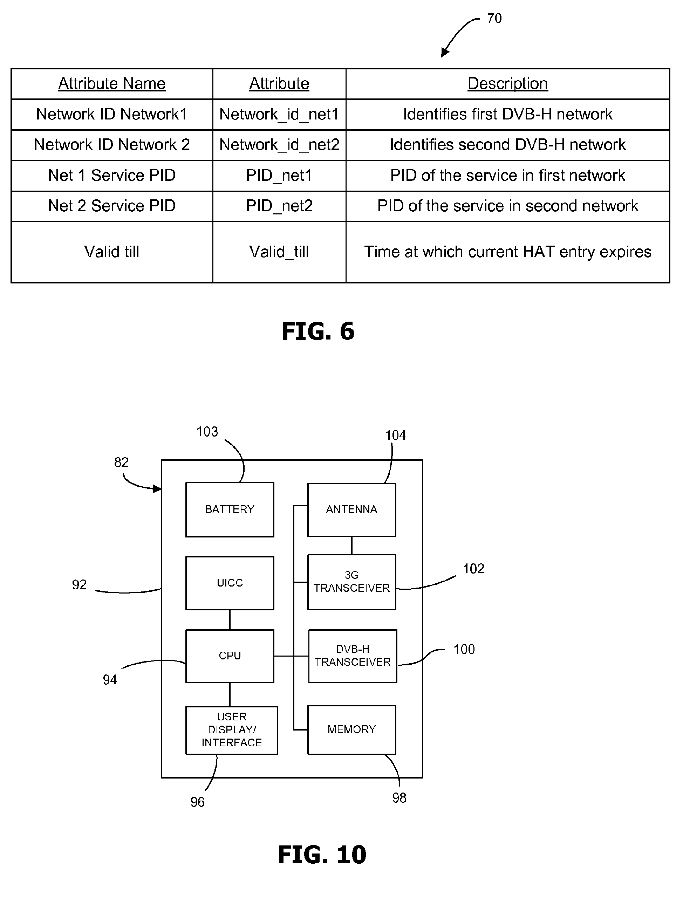

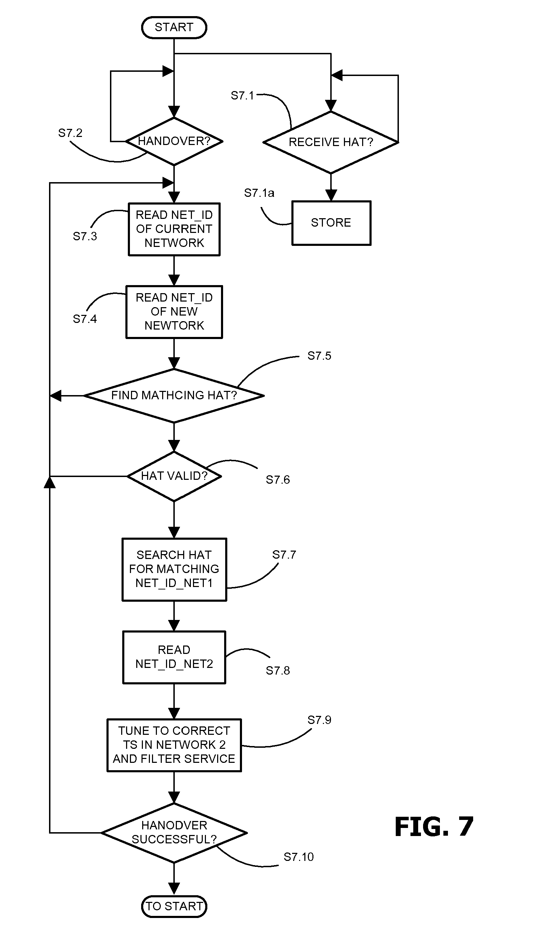

Fig. 6 illustrates the general concept of a Handover Association Table (HAT) 70 for carrying handover data that enables the mobile receiver 12 to quickly and easily discover the correct service_id that it must filter in the second network 60. The HAT 70 comprises five attributes: Network_id_net1 and Network_id_net2, PID_net1 and PID_net2, and Valid_till. Referring to Fig. 7 the steps of a method of processing HATs performed by the mobile receiver 12 are shown from which function of the attributes in the HAT 70 will become clear.

The mobile receiver 12 stores in memory 31 computer executable instructions that enable it to perform the method steps of Fig. 7. These steps may be triggered when the mobile receiver 12 is switched on, or when a service is selected by the user for reception. The first step is to monitor two states: whether a HAT 70 is received at step S7.1 and whether the mobile receiver 12 is to handover or switch reception of the current service at step S7.2. If a HAT 70 is received it is stored in memory at step S7.1a. Further details are given below of the broadcast of the HAT 70 for reception by mobile receivers.

Assuming that the mobile receiver 12 is in the area of signal overlap 54 between the first network 50 and the second network 52, it may determine that handover is needed or is desirable at step S7.2. This could result from user input instructing a change of network, a decision made by the mobile receiver itself, or could be triggered by the network operator. If not, the mobile receiver 12 simply waits. At step S7.3 the mobile receiver reads the network_id of the network 50 ('current' network); this may be read from the NIT transmitted on PID 0x0010 in each transport stream. At step S7.4 the network_id of the network 52 ('new' network) is read; this may be read from the NIT of any transport stream broadcast by the network 52 during an off time of reception of the service from network 52 for example. The mobile receiver then checks at step S7.5 for a stored HAT that matches the two network_id attributes. It is conceivable with future broadcast networks that network operators will operate smaller and smaller areas of coverage as demands on bandwidth increase, etc. Therefore one broadcast network may have more than one other broadcast network to which a mobile receiver might handover. Accordingly the mobile receiver 12 may receive and store more than one HAT 70 from each network. Each HAT would provide service mappings between the current network service_ids and the service_ids in one other network to which the mobile receiver might handover. In that way all of the possible handover options are covered.

Having located the HAT 70 matching the current and desired new network, the mobile receiver 12 reads at step S7.6 the Valid_till attribute to check whether or not the HAT has expired. If so, it returns to step S7.3 until a new HAT 70 is received and stored. At step S7.7 the mobile receiver 12 uses the current service_id in network 50 (PID_net1 attribute) to look up and then read the service_id (PID_net2) applicable in the network 52 at step S7.7.

The mobile receiver 12 now has the PMT_PID in the new network that matches the current service the user is receiving from the current network. At step S7.9 the mobile receiver 12 tunes to the correct transport stream containing the desired service and process and display the data of the service to the user. One way to do this using the PMT_PID is to select at random a transport stream in network 52 as described in the NIT of network 52. Once tuned to a particular transport stream the mobile receiver 12 reads the Service Description Table (SDT) available on the reserved PID value 0x0011 (see ETS 300 468 section 5.1.3). The sub-tables of the SDT list each transport_stream_id broadcast by the network, together with each service_id (i.e. PMT_PID) that transport stream ca rries. Since the PMT_PID is unique in that particular network the mobile receiver 12 may therefore discover the correct transport_stream_id containing the matching service. Using the NIT (PID 0x0010 of any transport stream) the centre frequency, etc. of the desired transport stream is known and the mobile receiver 12 may tune to that frequency, receive the transport stream and use the PMT_ PID from the HAT 70 to access the correct PMT in the PAT, and thereby filter the correct elementary streams from the transport stream in order construct the matching service for the user.

At step S7.10 the mobile receiver 12 checks that the handover has been completed and is receiving the matching service in the network 52. If not, the process returns to step S7.3 and handover is tried again.

Following successful completion of the handover from DVB-H network 50 to DVB-H network 52, the mobile receiver 12 caches the HAT 70 in memory with a period of validity up to the time indicated in the Valid_till attribute.

If the mobile receiver 12 moves back toward the area of overlap 54 (or if the propagation conditions change and cause the area of overlap 54 to shift for example) it is possible for the same HAT 70 be used to handover in the other direction. Firstly, the mobile receiver 12 checks whether or not the HAT 70 in the cache is still valid. If expired, the HAT 70 is deleted and the mobile receiver 12 returns to step S7.1. If still valid the HAT can be used again. In particular, since the DVB-H network sends two Network_id attributes in the HAT table, the data in the HAT can be searched in either direction to lookup the correct service _id in the other network. For example, the current network_id field can be read from the NIT and used as the Network_id_net1 attribute. The network_id of the other network may be obtained from a NIT_other table for example. Using this data together with the current service_id, the corresponding service_id can also be discovered in the other network whether the mobile receiver is handing over from the DVB-H network 50 to the DVB-H network 52, or *vice-versa.*

In addition to or instead of the Valid_till field it is possible for the HAT 70 to contain an optional attribute (per HAT) that specifies that last time that any of the service mappings in the HAT were updated. In this way the mobile receiver 12 may determine whether or not the HAT stored in the cache is still valid without having to filter and read every HAT that is broadcast. This is expected to further save battery power.

Another possibility is for the HAT to contain information obtained and/or derived from the TOT and TDT tables of each network represented in the HAT 70. For example, the HAT 70 may contain information of the relative lead or lag (in seconds) of audio and video data the new network relative to the current network. The mobile receiver 12 may act accordingly during the handover. For example, if the new network leads the current network, the mobile receiver 12 may buffer data from the new network for a time substantially equal to the lead to facilitate smooth handover from the user's perspective. If the new network lags the current network the mobile receiver 12 may pause the service (and display an appropriate message to the user) until the service in the new network catches up with the time of pause. The service may then be resumed as received from the new network.

*Creation of Handover Association Table*

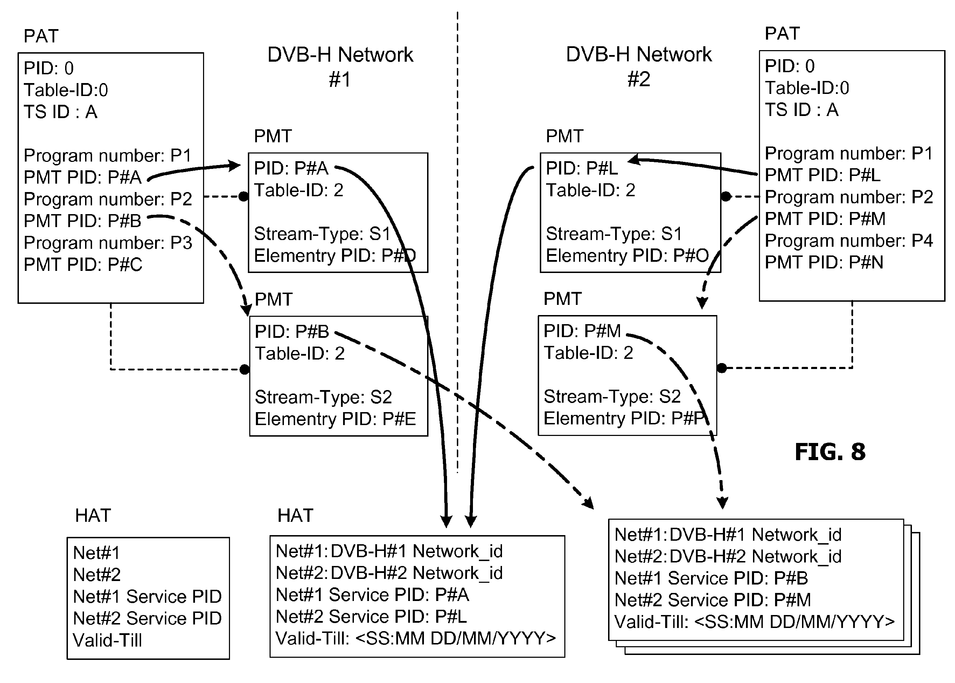

Fig. 8 illustrates how the HAT 70 is created by the DVB operator. It is assumed that the or each DVB operator associated with a particular DVB-H network shares PSI/SI data (such as the PAT and PMT) with other DVB operators. A spreadsheet can be constructed which maps each service_id to the corresponding service_id in the other network. The spreadsheet could be constructed manually by co-operation between the two DVB operators. Alternatively it is possible for one DVB operator to use a receiver and software for analysing DVB transport streams (such as DVBStreamExplorer - see www.dvbstreamexplorer.dk, DVBSnoop - see dvbsnoop.sourceforge.net, and Kamaelia - see www.kamaelia.org) to obtain the service information data and obtain the mapping between service_id and user channel number in the other DVB network automatically; alternatively the DVB operator may receive either the entire broadcast signal or simply the SI tables over a computer network such as the Internet for example. The software may proceed to analyse the SI tables and, for each channel of the operator's network, to search for a corresponding service in the other network using a likely common identifier that becomes less restrictive with each search if no matches are found for the current channel. The likely common identifier may be changed for each search as follows:

(1) use a channel name to search for an identical channel name in the new network; if none found:
(2) use a first content identifier to search for a current event in the other network with the same specific content as an event on the channel in the operator's network; if none found:
(3) use a second content identifier to search for a current event in the other network with the same general content as an event on the channel in the operator's network; if none found:
(4) use a service provider name to search for a channel in the other network with the same service provider as the operator's network.

For step (1) the software may be configured or adapted to read the SDT of each transport stream an output for each service_id one or more field from the associated service_descriptor (e.g. service or channel name such as 'BBC1'). The same process may be performed on the DVB operator's own network. Based on this information it is possible to automatically compile the spreadsheet (or populate/amend any other sort of database) mapping the service_ id of one service in the first network to the service_id of the same or a similar service in the second network using one or more field (e.g. service_name) from the service_descriptor as a common identifier.

If the operator's network cannot find a matching service in the other network step (2) may be followed in an attempt to identify a similar service that might be acceptable to the user. In particular, the SI tables from the other network are parsed to look for one or more content descriptor that matches each content descriptor of each event presently ongoing in the current network. The content descriptor is defined in ETSI EN 300 468 in section 6.2.9 and its function is to provide classification information for an event i.e. a particular programme on a particular channel. The standard recommends that content descriptors are sent in the EIT and SIT tables, although this is not compulsory and therefore these descriptors might be found in other tables. Accordingly the parsing process may begin with these two tables and if content descriptors are not found, proceed to look in all of the other tables in the transport stream(s). Once content descriptors are found, the parsing process may take each content descriptor of each current event in the operator's network and look for a match in the content descriptors of the other network. For example, the parser may look for a match between the 8 -bit field that comprises the Content_nibble_level_1 and Content_nibble_level_2 fields that together describe the content of the event. For example, a comedy programme is described by these two nibbles as 0x1 0x4. The parser may look for one or more matching comedy event (i.e. programme) in the other network's transport stream (s). If more than one event is found, the process may look at the service descriptor (usually found in the SDT) to identify the service_provider_name of each of the matching events to further refine the list to those of the same service provider (e.g. BBC). If more than one matching service is provided by the same service provider, the process may select one at random to be mapped to the service_id in the operator's network, or may simply map all of them to the service_id in the operators network. In this way the user would be provided with a selection of potentially suitable channels to choose from during handover. If at any point there is only one matching event, the corresponding service_id is mapped in the handover database to the service_id in the operator's network.

If however, there is no match found when the process looks for a match with the 8-bits in the content descriptor, the process may look at step (3) for one or more event that matches the four bits of the level 1 nibble. This level represents a more general class of event than level 2, as follows:

Level 1

0x1 : "Movie/Drama",
0x2 : "News/Current Affairs",
0x3 : "Show/Game show",
0x4 : "Sports",
0x5 : "Children's/Youth",
0x6 : "Music/Ballet/Dance",
0x7 : "Arts/Culture (without music)",
0x8 : "Social/Political issues/Economics",
0x9 : "Childrens/Youth Education/Science/Factual",
0xa : "Leisure hobbies",
0xb : "Misc",
0xf : "Drama", # user defined (specified in the UK "D book")

In contrast, level 2 represents a much finer resolution of each level 1 type as follows:

Level 2

# movie/drama

0x10: "General",
0x11 : "Detective/Thriller",
0x12 : "Adventure/Western/War",
0x13 : "Science Fiction/Fantasy/Horror",
0x14 : "Comedy",
0x15 : "Soap/Melodrama/Folkloric",
0x16 : "Romance",
0x17 : "Serious/ClassicalReligion/Historical",
0x18 : "Adult Movie/Drama",

# news/current affairs

0x20 : "General",
0x21 : "News/Weather Report",
0x22 : "Magazine",
0x23 : "Documentary",
0x24 : "Discussion/Interview/Debate",

# show/game show

0x30 : "General",

```
        0x31 : "Game show/Quiz/Contest",
        0x32 : "Variety",
        0x33 : "Talk",

# sports

        0x40 : "General",
        0x41 : "Special Event (Olympics/World cup/...)",
        0x42 : "Magazine",
        0x43 : "Football/Soccer",
        0x44 : "Tennis/Squash",
        0x45 : "Team sports (excluding football)",
        0x46 : "Athletics",
        0x47 : "Motor Sport",
        0x48 : "Water Sport",
        0x49 : "Winter Sports",
        0x4a : "Equestrian",
        0x4b : "Martial sports",

# childrens/youth

        0x50 : "General",
        0x51 : "Pre-school",
        0x52 : "Entertainment (6 to 14 year-olds)",
        0x53 : "Entertainment (10 to 16 year-olds)",
        0x54 : "Informational/Educational/Schools",
        0x55 : "Cartoons/Puppets",

# music/ballet/dance

        0x60 : "General",
        0x61 : "Rock/Pop",
        0x62 : "Serious music/Classical Music",
        0x63 : "Folk/Traditional music",
        0x64 : "Jazz",
        0x65 : "Musical/Opera",
        0x66 : "Ballet",

# arts/culture

        0x70 : "General",
        0x71 : "Performing Arts",
        0x72 : "Fine Arts",
        0x73 : "Religion",
        0x74 : "Popular Culture/Tradital Arts",
        0x75 : "Literature",
        0x76 : "Film/Cinema",
        0x77 : "Experimental Film/Video",
        0x78 : "Broadcasting/Press",
        0x79 : "New Media",
        0x7a : "Magazine",
        0x7b : "Fashion",

# social/political/economic

        0x80 : "General",
        0x81 : "Magazine/Report/Domentary",
        0x82 : "Economics/Social Advisory",
```

EP 2 061 166 A2

0x83 : "Remarkable People",

# children's youth: educational/science/factual

0x90 : "General",
0x91 : "Nature/Animals/Environment",
0x92 : "Technology/Natural sciences",
0x93 : "Medicine/Physiology/Psychology",
0x94 : "Foreign Countries/Expeditions",
0x95 : "Social/Spiritual Sciences",
0x96 : "Further Education",
0x97 : "Languages",

# leisure hobbies

0xa0 : "General",
0xa1 : "Tourism/Travel",
0xa2 : "Handicraft",
0xa3 : "Motoring",
0xa4 : "Fitness & Health",
0xa5 : "Cooking",
0xa6 : "Advertisement/Shopping",
0xa7 : "Gardening",

# misc

0xb0 : "Original Language",
0xb1 : "Black and White",
0xb2 : "Unpublished",
0xb3 : "Live Broadcast",

# drama (user defined, specced in the UK "D-Book")

0xf0 : "General",
0xf1 : "Detective/Thriller",
0xf2 : "Adventure/Western/War",
0xf3 : "Science Fiction/Fantasy/Horror",
0xf4 : "Comedy",
0xf5 : "Soap/Melodrama/Folkloric",
0xf6 : "Romance",
0xf7 : "Serious/ClassicalReligion/Historical",
0xf8 : "Adult",

The process is quite likely to find more than one event that matches at Level 1. Accordingly, the process may try to reduce this list in the same way described above i.e. by matching service provider names. If more than one event remains, the process may map the service_id in the operator's network to serveral service_ids in the other network. Accordingly on handover the user may be presented with a list of channels to select from based on the matching list broadcast in the HAT; that list should be shorter than the total number of channels available in the new network.

If no matches are found at all by looking for matching content descriptors, the process may perform step (4) in which the service_provider_name is used to search the service descriptors in the SDT in the transport stream(s) of the other network for a match. By mapping those events which have the same service provider, the user will be provided with a list of channels to chose from which may roughly correspond to his or her taste.

This entire process may be repeated either substantially continuously or at pre-determined intervals (e.g. every 10, 20, 30 minutes, hour, day or week for example) so that the handover database is kept up to date or at least substantially up to date. The frequency of updating may be selected by the network operator and is implementation specific. In this way, the HAT that is broadcast will always be virtually up to date with the latest channel and/or event mappings. This is expected to be particularly important for future broadcast networks in which programmes/channels are likely to be much more dynamic meaning that service_ids of each such programme/channel are subject to frequent change.

14

When it is desired to create a HAT 70 for broadcast, the data stored in the spreadsheet/database is processed by the server 25 to place it in the appropriate syntax before being packetised for transmission in the transport stream. The syntax for the HAT 70 is the table syntax used to transmit PSI/SI data and it may be sent as a private data table (as defined in ETSI 301 192) with a table_id defined by the DVB operator. The table containing the HAT may comprise a continuous stream of HAT entries as defined by the HAT 70. These entries can be easily filtered automatically by suitable programming of the mobile receiver 12. To broadcast the HAT data, any of the following methods may be used: data piping, data streaming, multi-protocol encapsulation or data carousels (see ETSI EN 301 192). For example the HAT data might be sent in under a separate PID to be filtered automatically by suitably programmed mobile receivers.

A HAT 70 is created, stored and broadcast in this way for each pair of DVB-H networks. If there are any changes in the mappings between service_ids, the spreadsheet/database will be automatically updated upon repeat of the mapping process and a new HAT broadcast to update mobile receivers (either at the regular broadcast interval or as a one off broadcast to ensure receivers are kept up to date).

The HAT 70 may be broadcast at any interval deemed appropriate by the network operator. However, ETSI TR 101 211 section 4.4.2 recommends that all sections of the SDT be transmitted at least every 2s. Accordingly the HAT may also be broadcast approximately every 2s, although this choice is implementation-specific. Updating of the handover database/spreadsheet may take place at less frequent intervals as explained above.

Optionally it is possible to use an unassigned Transmission Parameter Signalling (TPS) bit to flag whether or not handover data is sent in a particular transport stream. ETSI EN 300 744 V1.5.1 Section 4.6.1 indicates that in DVB-H there are six spare TPS information bits. In this way the mobile receiver 12 may discover whether or not handover data is present without having to decode and read the PAT.

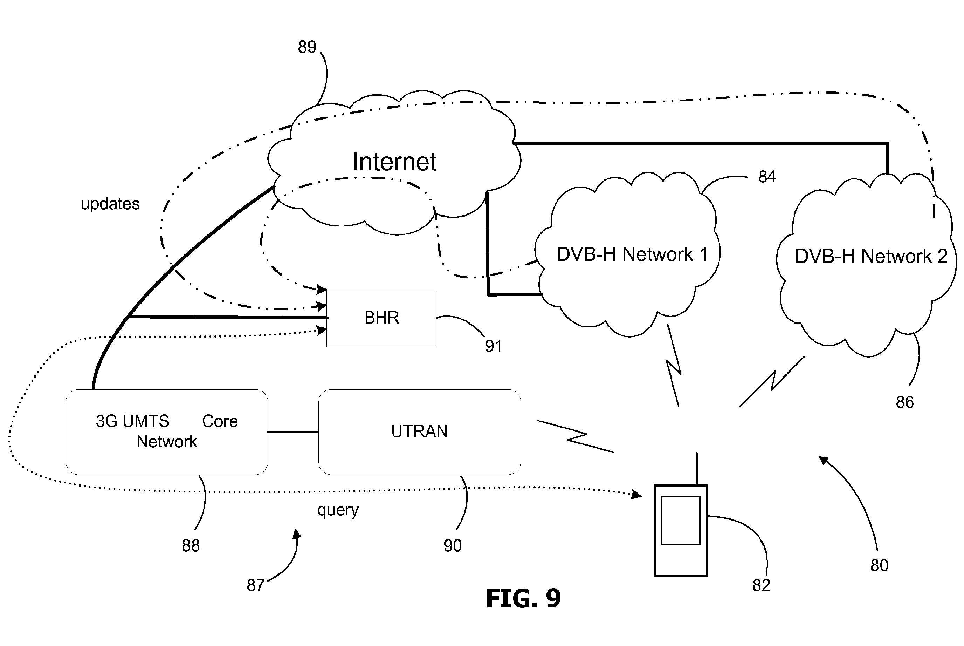

Fig. 9 illustrates a second embodiment of a network environment 80 according to the present invention. The network environment 80 is heterogeneous insofar as it comprises two broadcast type networks and a mobile type network from which a multi-mode mobile node (MN) 82 from may transmit/receive data (only receive in the case of the broadcast networks). The two broadcast type networks may each comprise a DVB-H network 84, 86 similar to that described in Fig. 1. The mobile type network may be a 3G UMTS network 87 comprising a core network 88 and a UTRAN 90. Each broadcast network 84, 86 and the UMTS network 87 have an interface to the Internet 89.

Referring to Fig. 10 the MN 82 comprises a case 92 housing a CPU 94, an user display/interface 96, a memory 98, a DVB-H receiver 100, a 3G transceiver (or interface) 102, a battery 103 for powering the MN 82, a UICC 104 for AAA purposes on the UMTS network 87, and an antenna 104 for reception and transmission of data with a UMTS network 87 and for reception of data from the broadcast networks 84, 86 respectively. The CPU 94 interfaces with all of the aforementioned components to process (store, access, etc.) electronic data. The memory 98 stores computer executable instructions that when executed by the CPU 94 perform the mobile node method steps as described herein. These computer executable instructions may be stored in the memory of the mobile node during manufacture.

Referring again to Fig. 9, the heterogeneous network environment 80 further comprises a logical entity herein referred to as a 'Broadcast Handover Register' (BHR) 91 whose function is to store and transmit one or more current HAT when requested by the MN 82. The BHR 91 may be located on a server or any similar computing device anywhere within or with access to the topology of the Internet 89.

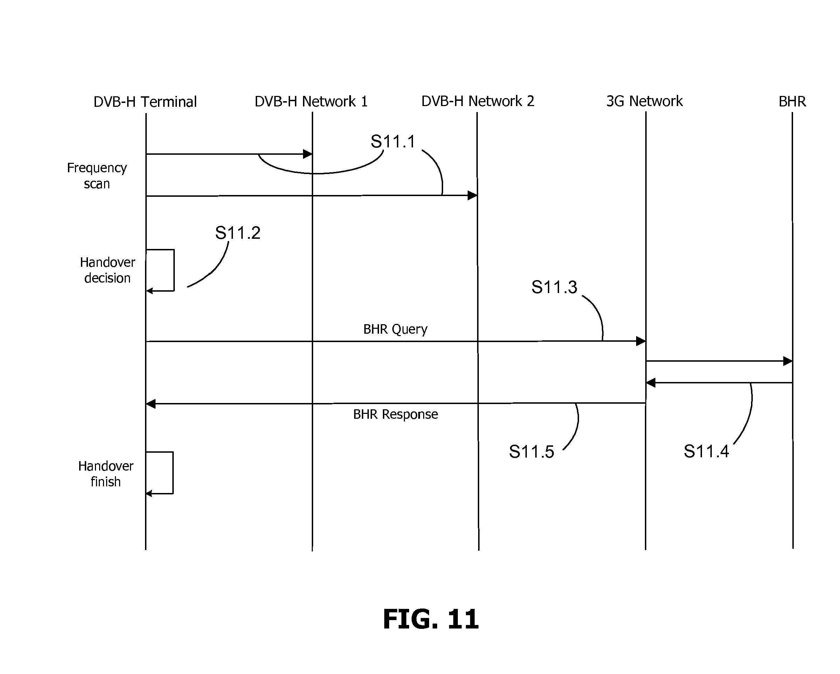

Referring to Fig. 11 a signalling diagram 110 illustrates a method in accordance with the second embodiment. In this example, it assumed that the MN 82 is tuned to the DVB-H network 84 and is filtering a particular service from a transport stream. At step S11.1 the MN 82 may discover the other DVB-H network 86 (during an off period of reception from the DVB-H network 84). At step S 11.2 the MN 82 determine to handover or switch reception of a transport stream from DVB-H network 84 to DVB-H network 86. The decision to switch may be based on measurement and comparison of S/N ratios from each network for example, or may be triggered by the user or by the network. At step S 11.3 the MN 82 composes and transmits a BHR Query message using the 3G transceiver 102 to the UMTS network 87. The BHR Query message comprises the following fields: Network_id_net1, Network_id_net2 and PID_net1. The UMTS network 87 uses the data in these fields to query the BHR 91 at step S11.4. The BHR 91 uses the Network_id_net1 and Network_id_net2 to lookup the correct HAT stored in memory. For each DVB-H network there is a number of HATs stored by the BHR 91 equal to the possible number of other DVB-H networks to which the a MN 82 may switch.

Once the correct HAT is located the BHR 91 looks up the service_id corresponding to the one sent in the PID_net1 field. At step S11.5 the BHR 91 sends a BHR Response message to the UMTS network 87. The BHR Response message comprises the original message plus the data from the PID_net2 field in the HAT (and any other optional attributes). Finally the UMTS network 87 forwards the message to the MN 82 using the UTRAN 90.

Upon receipt of the BHR Response the MN 82 now has the mapping between the current service_id in DVB-H network 84 and the corresponding service_id in DVB-H network 86 to which it wishes to switch. The MN 82 proceeds as described above in order to actually perform the switch.

Since the mobile receiver does not have to perform extensive operations, such as string searching the new EPG for the text identifying the channel in the current network, less battery power is consumed. Furthermore the mapping between service_ids is kept under control of the network operators, reducing the chance of errors following from reliance by mobile receivers on inaccurate EPGs for example. Service handover time is also expected to be less than the simply string searching approach; this helps to improve the quality of the service from the user's perspective, particularly if signal strength from the current network is suddenly lost.

The methods described herein are also readily scalable. As already mentioned, the methods can be extended to more than one network overlapping (partially or completely) the network to which the mobile receiver is tuned. The number of entries in the HAT is linearly proportional to the number of services. If the number of DVB-H networks is n and the number of services in each network is s, then to move from any one of the networks directly to any other requires a HAT with a total number of rows T(s,n) given by:

$$T(s,n) = s[(n-1)+(n-2)+...+0] = s\sum_{k=0}^{n-1}[n-(k+1)], s \ge 1, n \ge 2$$

This assumes that for any n each network is partly overlapped by each of the remaining *n*-1 networks. In reality for large n this is unlikely and therefore this expression for *T(s,n)* represents a worst case scenario. Even so, with each service_id and each network_id being a 16 bit value (2 bytes), the size of the HAT will not be large. The approximate minimum size in bytes of the HAT (ignoring the Valid_till field) is given by:

$$8 * T$$

For example assuming $s = 100$, $n = 2$ gives $T = 100$ and the size of the table as approximately 0.8kB. This places an extremely low overhead on network resources, yet offers significant advantage in terms of the operation of the service from the users' perspective.

Management of the HAT is straightforward: if there are any changes to service_id the spreadsheet or other database from which the HAT table is created can be updated very quickly and easily, particularly when following the automated procedure described above.

If the network operators mutually agreed, a common content management system may be used to control and update the BHR 91. For example a batch update of HAT data stored by the BHR 91 may be done in the same way as it is done for other register databases in the UMTS network 87, such as the Home Location Register (HLR).

An alternative possibility for transmitting the HAT in the second embodiment is to send the handover data using a Multimedia Broadcast Multicast Service (MBMS). To that end the MBMS may announce the multicast group as a particular service in the network and therefore may send metadata to the receivers in a suitable manner. Such metadata may include a Session Description Protocol (SDP) file that describes the handover service, including details of the multicast group that each receiver must join if it wishes to receive the handover service. Following discovery of the handover service the broadcast-enabled mobile receivers join the multicast group specified in the SDP file. The BHR 91 periodically transmits the HAT to the members of the multicast group using the MBMS in the multicast mode. The mobile receivers may then act as described above in order to execute handovers between broadcast networks whilst maintaining continuity of service.

A further possibility is that multicast groups may be defined based on Service Level Agreements (SLAs) between broadcast operators. A HAT may then be stored for each particular multicast group to restrict the handover possibilities available for receivers in each group based on the SLAs. According the MBMS may offer more than one handover service to the mobile receivers. For example, a mobile receiver may be part of the SKY® broadcasting network. The SKY network may have an SLA with the BBC® and ITV® networks respectively. Accordingly two HATs may be transmitted to members of the 'SKY' multicast group providing mappings only between service identities in the SKY network and service identities in the BBC and ITV networks respectively. Thus the HATs only facilitate handover between the SKY network and the BBC network (and *vice-versa*), and between the SKY network and the ITV network (and *vice-versa*). Handover between the SKY network and any other broadcast network is not facilitated by the HATs available to that multicast group.

Some networks use encryption for pay channels. However this encryption is usually of the underlying elementary streams carrying audio and video data. Since the PSI/SI tables are not normally encrypted, the HAT data will be unaffected and will be readable by mobile receivers whether or not any of the services broadcast by the network are encrypted.

The invention is applicable in other types of broadcast network, including but not limited to:

*T-DMB*

T-DMB is a digital radio transmission system for sending multimedia to mobile receivers. It can operate either via satellite (S-DMB) or terrestrial (T-DMB). It is an offshoot of DAB and relies on the underlying DAB protocols (see ETSI TS 102 427 and TS 102 428) to place both audio and video data in an MPEG-2 transport stream. DMB uses service data in the form of PSI as defined under the MPEG-2 standard. It therefore makes use of the tables PMT and PAT, together with PMT_PIDs to identify specific services carried in the transport stream(s). Accordingly the HAT can also be broadcast in over a DMB type network, and mobile receivers can receive and utilise the data in the HAT in the same way as described above under the DVB-H embodiment.

*MediaFLO®*

MediaFLO is a proprietary technology developed by Qualcomm for broadcasting digital data to mobile receivers and relies on MPEG transport streams. Meta-data about the services on offer is sent via PSI/SI data. Accordingly the handover data of the invention can be sent and used in a MediaFLO type network.

Handover between Broadcast networks of different communication protocols

In such a scenario it is possible for mobile receivers with appropriate interfaces (such as a multi-mode receiver for example) to handover from a network of one type to a network of another type, for example from a DVB-H network to a DMB network. To assist this, the handover data may comprise an optional attribute which specifies the name of the technology associated with the corresponding network_id. Therefore in Fig. 6 the HAT 70 would comprise two further rows below the Valid_till row, each row containing a respective type of technology. For example the attribute might contain data such as 'DVB-H' or 'T-DMB' or 'ISDB-T', etc. By adding the optional attribute of network type, the problem of two networks of differing technology types but with the same network_id can be overcome.

Handover from a Broadcast Network to a Bi-Directional Wireless Network

Many mobile receivers, known as multi-mode terminals, are now provided with more than one communication interface. For example, a PDA may have a WLAN interface, a broadcast interface and a 3G interface. Both the WLAN and 3G interfaces provide for bi-directional wireless communication with remote networks.

*First Aspect*

Accordingly there is also the possibility for a handover from a broadcast network to a bi-directional network. To assist in such a scenario whilst the receiver is receiving a service the HAT can be broadcast with an optional attribute that maps the PMT_PID of the service in the broadcast network to a URI of the media server providing the same or an associated service. The URI may comprise an IP address/TCP port number of the media server. Further optional attributes that could be included in the HAT are: a network identifier (e.g. SSID of a WLAN and/or Mobile Network Code of a mobile network) of the new network, a base station identifier (e.g. a Cell ID of the base station and or a hardware identifier such as a MAC address of the WLAN interface of an access point), and possibly a username and password combination, one for the WLAN itself and/or one for the media server where the service can be obtained.

Upon determination that a handover from a broadcast network to a WLAN network is prudent, the mobile receiver reads the HAT to determine the URI of the media server (and any of the other optional extra attributes which can be included) to which it will send a service request once connected to the WLAN.

If there are a number of bi-directional networks accessible to the mobile receiver 12 within the area of coverage of the broadcast network it is possible for the broadcast network to broadcast (or for the MBMS network to provide access to) only a single HAT dealing with all handover possibilities. To that end the HAT provides mappings between a service_id in the broadcast network, a URI, a network identifier (e.g. SSID for a WLAN or a Mobile Network Code for a cellular network) and possibly a hardware identifier (such as a MAC address) if the network identifier is an SSID. Upon discovering the new network, the mobile receiver uses the service_id, network identifier and hardware identifier to query the HAT. This reveals the URI that the mobile receiver should use to request an associated service from the new network. Accordingly, dependent on the number of bi-directional networks, each service_id in the broadcast network may be repeated several times in the HAT, each entry mapping to a different URI distinguishable using the identity of the new bi-directional network. A particular advantage of sending handover data in this way is that it does not matter whether the mobile receiver is in the first or second broadcast network. The network identifier of the bi-directional network, the service_id and the hardware identifier are sufficient to enable the correct URI to be retrieved from the handover data.

Alternatively, the broadcast network may broadcast a number of HATs, one for each bi-directional network to which handover may be accomplished from the broadcast network. In this way each service in the broadcast network is only mentioned once in each HAT.

The mobile receiver may receive the network identifier and hardware identifier from beacons transmitted by each bi-directional network. For example a beacon frame from a WLAN comprises the SSID of that WLAN, and the MAC address of the wireless interface is sent in the header of the beacon.

*Second Aspect*

In the previous scenario, the handover data always includes space for a service identity in the new broadcast network, even if that space in the table is left blank. However, it is envisaged that handover data may be broadcast from a broadcast network that does not include any data or space for such data about matching services in other broadcast networks. In that case the handover data only maps service_ids in one broadcast network to data that facilitates the mobile receivers to obtain the same, similar or an associated service from a bi-directional network.

To that end handover data is broadcast that maps a service identity (such as the PMT_PID of the service in the broadcast network) to a network identifier (e.g. an SSID of a WLAN or a Mobile Network Code of a mobile network) and to a URI of a media server providing the same or an associated service. The URI may comprise an IP address/TCP port number. Further optional attributes that could be included in the handover data include: a base station identifier (e.g. a Cell ID of a base station or a hardware identifier such as a MAC address of the WLAN interface of the access point); and/or a username and password combination, one for the WLAN itself and/or one for a media server where the service can be obtained.

One particular advantage of this is that the mobile receivers do not have to be configured in advance for operation with the bi-directional network. Furthermore, in some scenarios the network identifier assists mobile receivers to differentiate between bi-directional networks of the same type. For example, a mobile receiver may be able to detect several different WLANs in one location. Using the handover data the mobile receiver can determine whether or not one or more of those WLANs offers the same, similar or an associated service, and if so the IP address(es) where that service is obtainable. If there is more than one WLAN available, the mobile receiver may select to connect to the WLAN with the best S/N ratio for example, or may select one at random.

The handover data may also restrict the choice of bi-directional networks available to each mobile receiver. For example, the network identifier may comprise a mapping between a first bi-directional network identifier and one or more second bi-directional network identifier, whereby a mobile receiver that has a service contract with one bi-directional network such as a mobile operator, may use said handover data to determine which other bi-directional networks are available to that mobile receiver. The first bi-directional identifier may identify the network with which the user of the mobile receiver has a service contract. The second bi-directional network identifiers may identify those networks with which the mobile operator has service level agreements.

For example, if the mobile receiver has a 3G interface, the user may have a contract with Vodafone, who in turn may have service level agreements with other providers who might provide WLAN and or femtocell coverage in certain areas. The handover data may map Vodafone's Mobile Network Code (15 in the UK) to a network identifier of each other bi-directional network with which Vodafone has a service agreement. In use, the mobile receiver uses the first bi-directional network identifier (i.e. 15 in this example) in combination with the or each other bi-directional network identifier that it can detect (such as an SSID) until it finds a match in the handover data. The match maps to a network layer address, etc. that the mobile receiver can use to obtain the same or a similar service. In this way the network operator is able to control using the handover data which bi-directional networks the mobile receivers can handover.

If the bi-directional network to which the mobile receivers may handover comprises an MBMS, the corresponding URI in the handover data may give the location of the SDP file that describes the same, similar or an associated service to the one received from the broadcast network. Once connected to the bi-directional network, a mobile receiver uses the URI indicated by the handover data to obtain the SDP file describing the same, similar or associated service. Using the data contained in the SDP file the mobile receiver can take the necessary steps to download or stream the service over the MBMS. Further details of how user services may be delivered using MBMS are found in 3GPP TS 26.346 V2.0.0 to which reference is specifically made in this respect.

In either aspect it is not essential that the media server supply, via the bi-directional network, an identical service to the one received from the broadcast network. It is possible for the media server to supply an associated or related service to the one received from the broadcast network. For example, if the mobile receiver 12 is receiving a shopping channel from the broadcast network and the mobile receiver is taken by the user into a store operating a WLAN, the mobile receiver may handover to the WLAN. The mobile receiver 12 sends to the IP address and port number indicated in the HAT a request for the same service. However, the media server actually delivers a television channel (or other service) showing goods, promotional offers, etc. of the store.

The types of bi-directional network to which mobile receivers may handover in any embodiment above include, but are not limited to: 3G, 4G or any future cellular network, femtocells, WLANs, Wi-fi or WiMAX. A femtocell is a base station that incorporates all of the major components of the telecommunication infrastructure and that is designed to be used with a Ethernet or broadband connection, whereby better signal coverage and data rates on cellular frequencies can be provided inside buildings for example. Such devices are currently available from www.ubiquisys.com for example. A typical example of a femtocell is a UMTS access point base station comprising a Node-B, Radio Network Controller (RNC) and GPRS Support Node (GSN). The only connection from the device is at the link layer over Ethernet. Authentication takes place locally within the femtocell. In an alternative architecture for the device, the HLR resides elsewhere in the network and is under direct control of the cellular network operator.

A user receiving a service from a broadcast network may handover to a femtocell when the receiver is brought within range. To detect the presence of a femtocell the mobile receiver may use normal GSM and UMTS radio procedures. Accordingly to assist mobile receivers to handover from a broadcast network to a femtocell, the handover data may comprises a network identifier (e.g. Mobile Network Code) and a base station identifier (e.g. Cell ID and/or a hardware identifier such as a MAC address). The network identifier identifies the network operator of the femtocell, and the base station identifier enables the mobile receiver to distinguish between signals from the same network but from different base stations (be they from a macro cell or from a neighbouring femtocell).

In any embodiment or aspect of the invention described herein, if there are mobile receivers present in the reception area that have multi-mode capability, the handover data may be transmitted to those multi-mode receivers via any network to which each of those receivers has access. For example, in the case of handover from a broadcast network to a bi-directional network the handover data may be transmitted by any other network from which the mobile receiver can receive data. Therefore it is not essential that the mobile receivers receive the handover data from the network from which handover is to take place.

Although the embodiments of the invention described with reference to the drawings comprises computer apparatus and methods performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the methods according to the invention. The carrier may be any entity or device capable of carrying the program. For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal that may be conveyed via electrical or optical cable or by radio or other means.

When the program is embodied in a signal that may be conveyed directly by a cable or other device or means, the carrier may be constituted by such cable or other device or means. Alternatively, the carrier may be an integrated circuit in which the program is embedded, the integrated circuit being adapted for performing, or for use in the performance of, the relevant methods.

**Claims**

1. In a broadcast network environment comprising a first broadcast network and a second broadcast network, each broadcast network for broadcasting a plurality of services, each service identifiable by a respective service identity, and in which mobile receivers are assisted to handover reception of a service from one of said first and second broadcast network to the same or a similar service in the other of said first and second broadcast networks, by transmitting handover data toward said mobile receivers, which handover data comprises a mapping between a service identity of a service in said first broadcast network and a corresponding service identity of the same or a similar service in said second broadcast network, a method of generating said handover data for transmission to said mobile receivers,
   **characterised by** the steps of said first broadcast network:

   (a) receiving a broadcast signal from said second broadcast network;
   (b) for said service identity in said first broadcast network, using a likely common identifier to search for one or more corresponding service in service information data found in said broadcast signal, whereby if available said corresponding service identity of the same or a similar service in said second broadcast network is discovered.

2. A method according to claim 1, wherein if said corresponding service identity is not discovered, step (b) is repeated using another likely common identifier that is less specific than the first.

3. A method according to claim 1 or 2, wherein said common identifier comprises a service descriptor, and wherein step (b) comprises using said service descriptor to search said service information data for a matching service descriptor in said second broadcast network.

4.  A method according to claim 1, 2 or 3, wherein said common identifier comprises a first content descriptor identifying the type of service in said first broadcast network, and step (b) comprises using said first content descriptor to search said service information data for a matching first content descriptor in said second broadcast network.

5.  A method according to claim 4, wherein if said corresponding service identity is not discovered, step (b) is repeated using a second content descriptor less specific than the first.

6.  A method according to any preceding claim, further comprising the step of repeating steps (a) and (b) periodically, whereby changes in services in either said first or second broadcast network are reflected in said handover data and mobile receivers are able to choose or are provided with the most appropriate corresponding service during a handover.

7.  A method according to any preceding claim, further comprising the step of transmitting a URI in said handover data mapped to said service identity and said corresponding service identity, whereby handover of said mobile receiver from one of said first and second broadcast networks to a bi-directional network is facilitated.

8.  A method according to claim 7, further comprising the step of transmitting a network identifier of a bi-directional network to which said mobile receiver may handover, said network identifier mapped to said URI, such that said handover data comprises a plurality of entries for said service identity, each entry mapping to a respective bi-directional network, whereby said mobile receiver may use said handover data and a network identifier received from a candidate bi-directional network to determine the correct URI from which the same, an associated or a related service is obtainable via said candidate bi-directional network.

9.  A method according to claim 8, further comprising the step of transmitting a base station identifier with said network identifier, whereby said mobile receiver may distinguish between two or more bi-directional networks of the same type detected by said mobile receiver.

10. A method according to any of claims 1 to 9, further comprising the step of storing in electronic memory a handover database comprising a mapping between service identities in said first broadcast network and service identities in said second broadcast network.

11. A method according to claim 10, further comprising the step of processing handover data in said handover database into Service Information (SI) table format as a handover table, and storing said handover table (HAT) in said electronic memory.

12. A method according to any preceding claim, wherein upon receipt of said handover data each mobile receiver performs the steps of:

    (a) storing said handover data in memory; and
    upon selection of a service by a user and reception thereof by said mobile receiver on said service identity:
    (b) monitoring whether or not to handover reception of said service from said first broadcast network to said second broadcast network; and
    upon a decision to handover as determined by step (b):
    (c) using said handover data to lookup said corresponding service identity corresponding to said service identity; and
    (d) locating said service in said second broadcast network using said corresponding service identity as determined in step (c).

13. A mobile receiver comprising a memory storing computer executable instructions that when executed cause said mobile receiver to perform the mobile receiver steps of claim 12.

14. A broadcast network configured to perform the broadcast network method steps of any of claims 1 to 11.

15. A server comprising a memory storing a handover database as defined in claim 10.

**FIG. 1**

**FIG. 2**

**FIG. 3**

FIG. 4

Transport Stream — 40

Elementary Stream (PID 0)
Elementary Stream (PID 110)
Elementary Stream (PID 111)
Elementary Stream (PID 112)
Elementary Stream (PID 113)
Elementary Stream (PID 114)
Elementary Stream (PID 115)
Elementary Stream (PID 120)
Elementary Stream (PID 121)

42

PAT — 44

| Service | PMT-PID |
|---|---|
| 0 | 118 |
| 1 | 120 |
| 2 | 121 |

NIT
PID = 18

PMT (Service 1) — 46

| PID | Stream type |
|---|---|
| 110 | Video |
| 112 | Audio |
| 113 | Data |

PMT (Service 2) — 46

| PID | Stream type |
|---|---|
| 111 | Video |
| 114 | Audio |
| 115 | Data |

**FIG. 5**

| Attribute Name | Attribute | Description |
|---|---|---|
| Network ID Network1 | Network_id_net1 | Identifies first DVB-H network |
| Network ID Network 2 | Network_id_net2 | Identifies second DVB-H network |
| Net 1 Service PID | PID_net1 | PID of the service in first network |
| Net 2 Service PID | PID_net2 | PID of the service in second network |
| Valid till | Valid_till | Time at which current HAT entry expires |

**FIG. 6**

**FIG. 10**

FIG. 7

PAT

PID: 0
Table-ID:0
TS ID : A

Program number: P1
PMT PID: P#A
Program number: P2
PMT PID: P#B
Program number: P3
PMT PID: P#C

DVB-H Network #1

PMT

PID: P#A
Table-ID: 2

Stream-Type: S1
Elementry PID: P#D

PMT

PID: P#B
Table-ID: 2

Stream-Type: S2
Elementry PID: P#E

DVB-H Network #2

PMT

PID: P#L
Table-ID: 2

Stream-Type: S1
Elementry PID: P#O

PMT

PID: P#M
Table-ID: 2

Stream-Type: S2
Elementry PID: P#P

PAT

PID: 0
Table-ID:0
TS ID : A

Program number: P1
PMT PID: P#L
Program number: P2
PMT PID: P#M
Program number: P4
PMT PID: P#N

HAT

Net#1
Net#2
Net#1 Service PID
Net#2 Service PID
Valid-Till

HAT

Net#1:DVB-H#1 Network_id
Net#2:DVB-H#2 Network_id
Net#1 Service PID: P#A
Net#2 Service PID: P#L
Valid-Till: <SS:MM DD/MM/YYYY>

Net#1:DVB-H#1 Network_id
Net#2:DVB-H#2 Network_id
Net#1 Service PID: P#B
Net#2 Service PID: P#M
Valid-Till: <SS:MM DD/MM/YYYY>

FIG. 8

EP 2 061 166 A2

**FIG. 9**

EP 2 061 166 A2

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1838018 A